# EUROPEAN PATENT SPECIFICATION

(11) **EP 3 498 076 B1**
(45) Date of publication and mention of the grant of the patent: **21.04.2021**
(21) Application number: 17207730.7
(22) Date of filing: 15.12.2017
(51) Int. Cl.: A01D 46/30, B25J 9/02, B25J 11/00, B25J 15/00, B25J 5/00, B25J 9/00

(54) **MACHINE FOR AUTOMATICALLY HARVESTING FRUITS CULTIVATED IN ROWS**
MASCHINE ZUM AUTOMATISCHEN ERNTEN VON IN REIHEN KULTIVIERTEN FRÜCHTEN
MACHINE PERMETTANT LA CUEILLETTE AUTOMATIQUE DE FRUITS CULTIVÉS EN RANGS

(43) Date of publication of application: 19.06.2019
(73) Proprietor: Soluciones Robóticas Agrícolas S.L., 21700 La Palma del Condado (ES)
(72) Inventor: BRAVO TRINIDAD, Juan, Wilmington - New Castle, DE Delaware 19801 (US)
(74) Representative: Herrero & Asociados, S.L.

(56) References cited:
- WO-A1-92/04713
- WO-A1-2016/133918
- KR-A- 20150 133 397
- KR-B1- 100 784 830
- KR-B1- 101 756 454
- US-A1- 2016 050 852

## Description

### OBJECT OF THE INVENTION

The invention refers in general to machines for automatically harvesting fruits cultivated in rows. The invention is preferably applicable for harvesting strawberries.

An object of the invention is to provide an automatic harvesting machine with improved harvesting capacity, which is compact and easy to transport and to maintain.

### FIELD OF APPLICATION

The invention refers to harvesting automatic machines.

### BACKGROUND OF THE INVENTION

Various crops, such as strawberries, have been typically harvested using manual labor due to the delicate nature of the crops and the selective nature of the harvesting. The high seasonal demand for laborers and the limited labor force have resulted in a significant increase of labor costs.

As a result, numerous mechanical harvesters have been developed to reduce the labor and lower the overall cost of the harvested fruit. Most of the mechanical harvesters are extremely complex in operation and have a large number of moving parts that makes them difficult and costly to manufacture and maintain.

WO 2016/133918 A1 discloses an automated system for selectively picking crops from plants comprising robot positioning carriers (RPCs) carried by respective tracks and driven by respective drive systems.

Some prior art machines are based on robotic arms controlled by a vision system for detecting and harvesting fruits. For example, U. S. Patent application US 2011/252760 A1 is an example of a scalable machine for automatically harvesting fruits, wherein a robotic arm is controlled by a viewing system, and contact and distance sensors provide delicate handling of the harvested fruit.

Chinese patent application CN102577747A discloses an overhead strawberry picking robot, which comprises a collecting assembly formed by a carriage movable about a horizontal axis, and a shaft movable about a vertical axis. A robotic arm performs 3D movements and it is coupled at one end of the vertical shaft. As it can be observed for example in figure 1 of this Chinese patent application, typically there are two motors associated to respective endless screws, and the motors are separated from each other at separated locations of the machine.

On the other hand, Korean patent application KR20150133397A relates to a traveling device for an oriental melon harvesting robot.

One drawback of these traditional harvesting robots, is that its robotic arm is driven by long endless screws coupled with the shaft of an electric motor, so that it is necessary to provide enough space to accommodate the endless screws and motors, which results in large and bulky machines. Additionally, a large room has to be provided for allowing the 3D movement of the robotic arm, thus the machine requires a large space of operation, and its harvesting capacity is limited. Furthermore, the robotic arm has to be operated slowly to avoid striking and damaging crops accidentally.

Therefore, there is the need in this industrial field for harvesting robots with improved harvesting capacity, and which are simple to manufacture and repair.

### DESCRIPTION OF THE INVENTION

The invention refers to a harvesting automatic machine as defined by claim 1.

The harvesting automatic machine comprises at least a pair of straight rails parallel to each other, which when the machine is in use, are placed within a plane orthogonal to the ground.

At least a fruit collector assembly, preferably two or more of them, are coupled with the pair of rails and it can move along the rails. Each fruit collector assembly comprises a sliding carriage mounted on the pair of parallel rails, so that the carriage is movable along the pair of parallel rails reciprocally in both directions.

In turn, a collector robotic arm is mounted on the carriage, in such a manner that the robotic arm is movable with respect to the carriage in a transverse direction to the parallel rails. The robotic arm has a cutting and collecting head attached at its lower end for cutting and collecting fruits.

A first motor is provided for moving the carriage, and a second motor is provided for moving the robotic arm. A conventional rack and pinion mechanism, is preferably used for the movement of the carriage and for the movement of the robotic arm.

The first and second motors are mounted on the carriage. Due to this arrangement of the motors placed together at the carriage, the fruit collector assembly is very compact, which in turn allows two or more of these assemblies to be mounted on the same pair of parallel rails.

Two or more pairs of parallel rails are arranged consecutively one after the other in parallel planes, so that a machine with high density of fruit collector assemblies per area, is obtained, and the harvesting capacity (speed) of the machine is improved with respect to prior art machines.

Unlike prior art endless screws based machines, in present invention the fruit collector assembly is self-propelled, which results in a compact and simplified design.

Preferably, the first and second motors are electric motors and the pair of parallel rails are connected to an electric power source, so that the two motors are fed through the rails. This feature has the advantage that no wiring is used to feed the motors, hence the machine construction and maintenance is additionally simplified.

On operation, each robotic arm operates autonomously and independently from the rest for collecting the fruits, as the machine moves along the crop rows. These robotic arms are oriented towards one side of each row.

Conventionally, the machine comprises a viewing system including cameras and image processor, for detecting fruits positions, for example based on the fruits color and/or shape. Additionally, a controller is provided in cooperation with the viewing system, to coordinate individually the movements of the fruit collector assemblies mounted on the same pair of rails to avoid collisions, and for guiding each robotic arm towards each piece of fruit.

Some of the advantages of the inventions are the followings:
- high density of robotic arms per area
- high processing speed
- robotic arms easily replaceable
- low manufacturing and maintenance cost
- wireless construction
- water and dust resistant

### DESCRIPTION OF THE DRAWINGS

To complement the description which is being made and for the purpose of aiding to better understand the features of the invention, a set of drawings is attached to the present specification as an integral part thereof, in which the following has been depicted with an illustrative and non-limiting character:
FIG. 1.- shows in perspective view a detail of a fruit collector assembly mounted on a pair of parallel rails.
FIG. 2.- shows a front elevational view of the fruit collector assembly of figure 1.
FIG. 3.- shows another perspective view of the assembly of FIG. 1.
FIG. 4.- shows a rear elevational view of the assembly of FIG. 1.
FIG. 5.- shows a perspective view of a cutting and collecting head, according to a preferred embodiment of the invention.
FIG. 6.- shows a front elevational view of an embodiment of the harvesting machine in use, that is, suitably placed at a field of crops arranged in rows.
FIG. 7.- shows a front elevational view of an embodiment of the harvesting machine, wherein the machine is in a folded position for transportation and storage.
FIG. 8.- shows a plan view of an embodiment of the harvesting machine, without the vehicle.
FIG. 9.- shows a side elevational view of the machine of figure 8.

### PREFERRED EMBODIMENT OF THE INVENTION

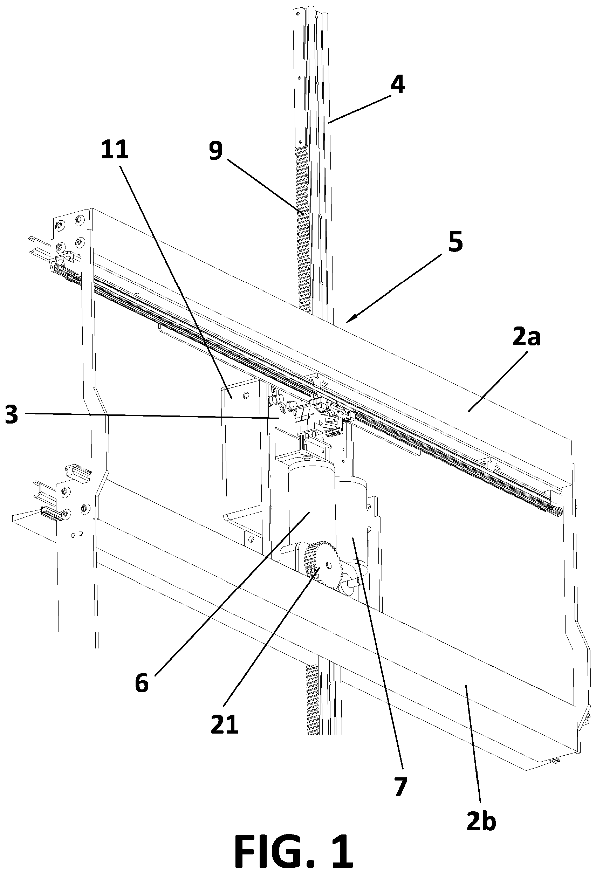

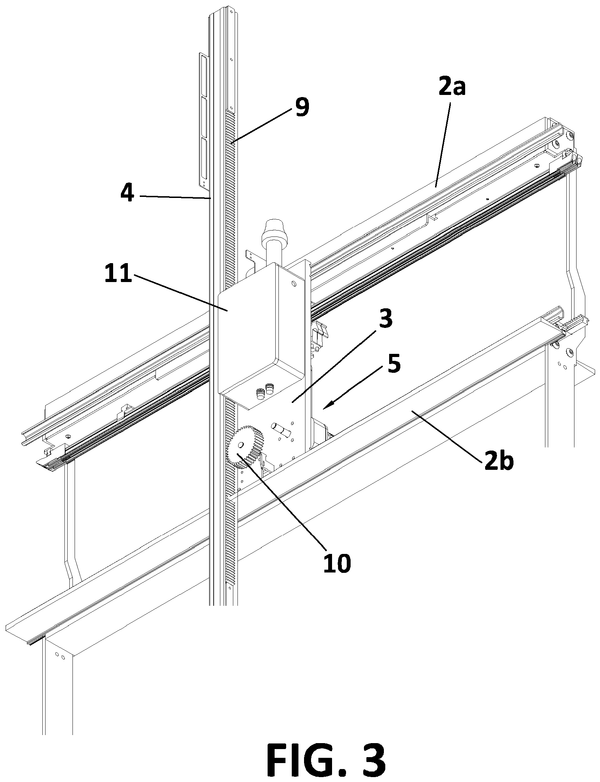

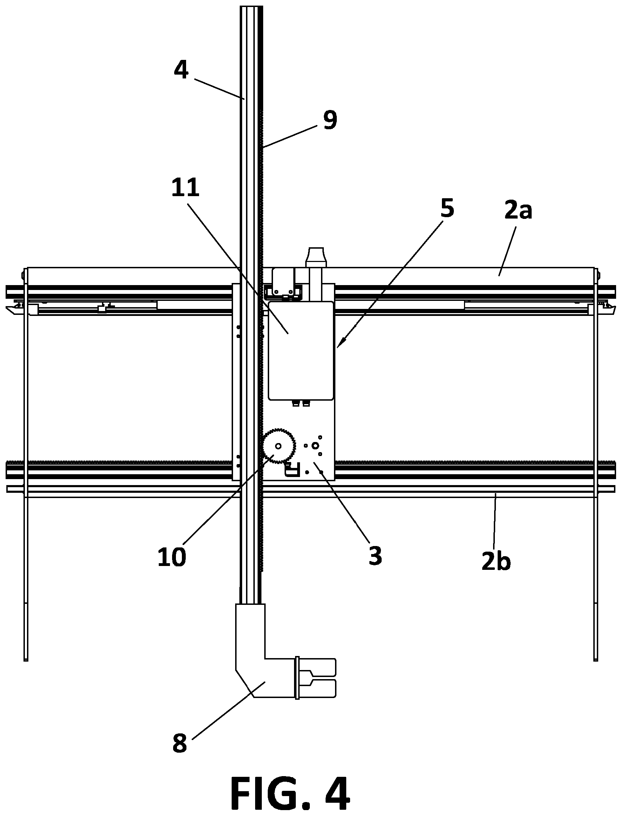

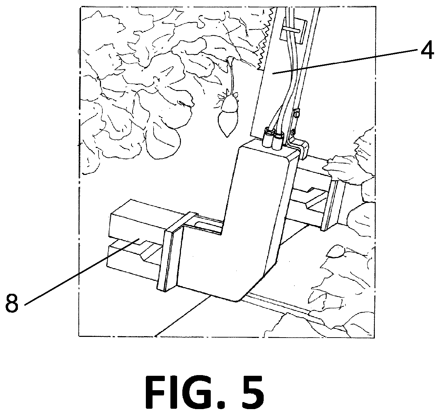

Figures 1 to 5 show in detail a fruit collector assembly (5) mounted at a pair (2) of rails (2a,2b) which are parallel to each other, and that when the machine is in use the pair of rails (2a,2b) are lying within a plane orthogonal to ground. The fruit collector assembly (5) is displaceable along the parallel rails (2a,2b), and for that the fruit collector assembly (5) includes a carriage (3) movably mounted on the pair of parallel rails (2a,2b), and a collector robotic arm (4) movably mounted on the carriage (3). The carriage (3) is movable along the pair of parallel rails (2a,2b), and the robotic arm (4) is movable in a transverse direction to the parallel rails (2a,2b), that is, vertically with respect to the ground.

First and second electric motors (6,7) are provided for moving respectively the carriage (3) and the robotic arm (4), and wherein the first and second motors (6,7) are mounted on the carriage (3), in order to obtain a compact design that would allow several fruit collector assemblies (5) to be mounted in the same pair of rails (2a,2b).

Preferably as shown in the figures, first and second motors (6,7) are arranged parallel to each other (the motor shafts are parallel to each other), and preferably first and second motors (6,7) are placed on the same side of the carriage (3), whereas the robotic arm is placed at the opposite side of the carriage (3).

A conventional rack and pinion mechanism, is preferably used to obtain the movement of the carriage and for the movement of the robotic arm. For this, there is a first toothed rack (not shown) at the lower rail (2b) and a first pinion (21) (toothed wheel) mechanically coupled by means of a reductor (not shown) with the first motor (6) shaft. The first pinion (21) is engaged with the first rack, so that when the first pinion (21) rotates, the carriage (3) moves along the rails (2a,2b).

When several fruit collector assemblies (5) are mounted in the same pair of rails (2a,2b), the toothed rack is common for all of them, and each assembly has its pinion engaged with the rack.

Similarly, there is a second toothed rack (9) at the robotic arm (4) and a second pinion (10) (toothed wheel) mechanically coupled by means of a reductor (not shown) with the second motor (7) shaft. The second pinion (10) is engaged with the second rack (9), so that when the second pinion (9) rotates, the robotic arm (4) moves vertically with respect to the carriage (3) and transversally to the rails (2a,2b).

As it can be observed in the figures, in this embodiment first and second pinions (21,10) are placed at opposite sides of the carriage (3).

For electrically feeding the motors (6,7), the two rails (2a,2b) are electrically powered. For example, the rails (2a,2b) include electric conductors (not shown) extending along the rails (2a,2b), and the two poles of an electric power source (not shown), preferably a DC power source, are respectively connected with the two conductors. The motors (6,7) of each assembly (5) are electrically connected to the rails (2a,2b) through the carriage (3) so that they are electrically fed continuously while they are moving.

A waterproof box (11) is also mounted on the carriage (3) for housing electric and electronic components, needed for controlling the fruit collector assembly (5).

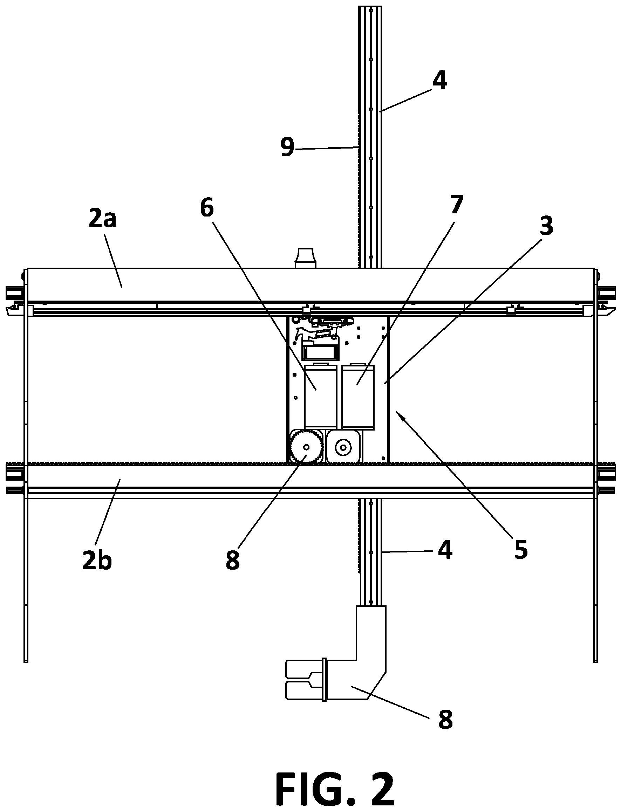

As shown in figure 2, the robotic arm (4) has a cutting and collecting head (8) attached at its lower end for cutting and collecting fruits. This head (8) is represented in more detail in figure (5), which includes a cutter (not shown) for cutting the fruits and a receptacle in the form of a basket for collecting the fruits.

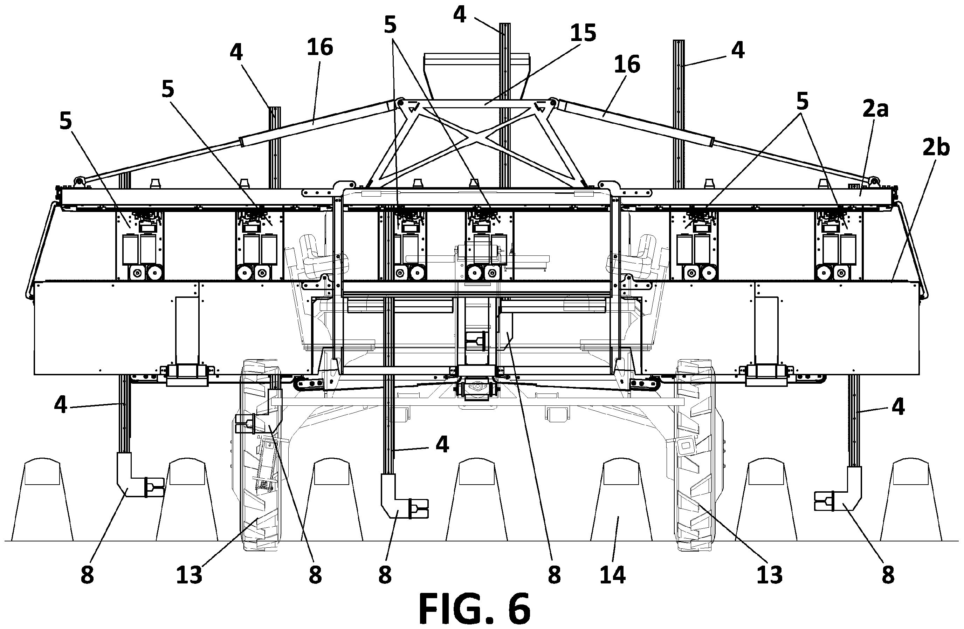

Figure 6 shows a general view of a harvesting automatic machine (1) according to an exemplary embodiment of the invention, wherein several fruit cutting and collecting assemblies (5) are mounted at the same pair of parallel rails (2a,2b). Since several fruit collector assemblies (5) share the same pair of rails (2), the number of components of the machine is reduced.

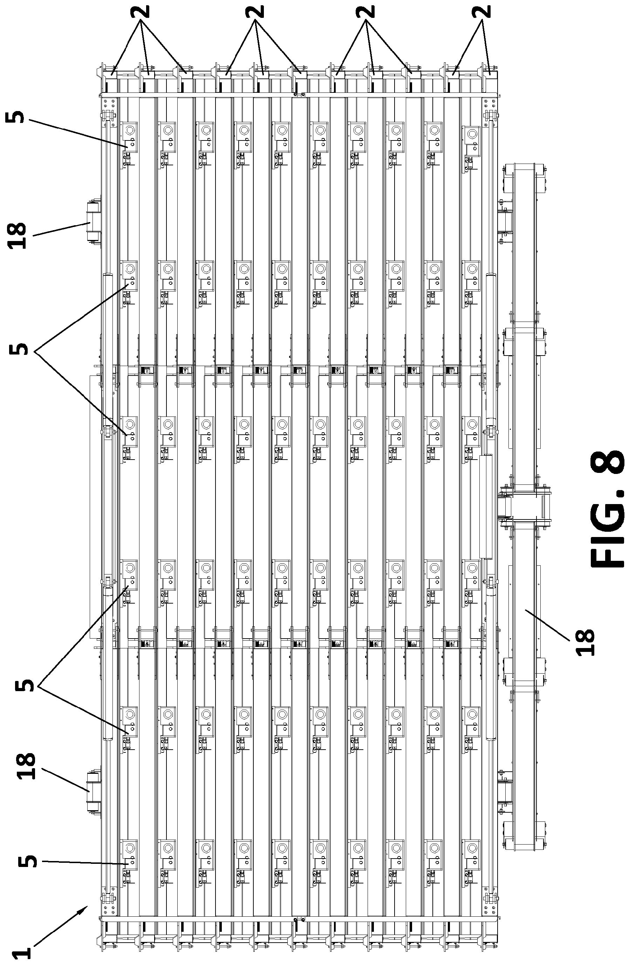

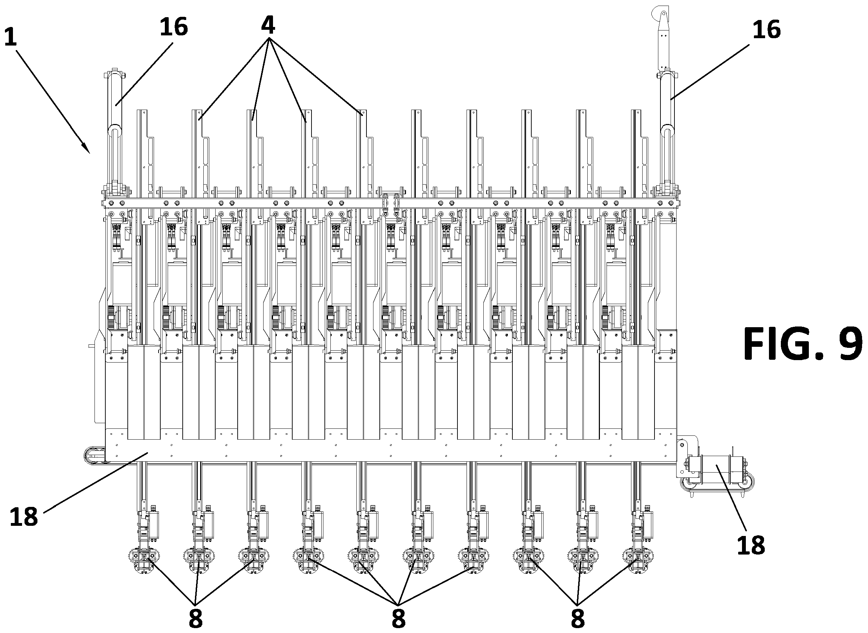

In turn as shown in figures 8 and 9, several pairs of parallel rails (2a,2b), each one including several fruit cutting and collecting assemblies (5), are arranged consecutively one after the other. Each pair of rails (2a,2b) is lying within a plane, all the planes are parallel to each other.

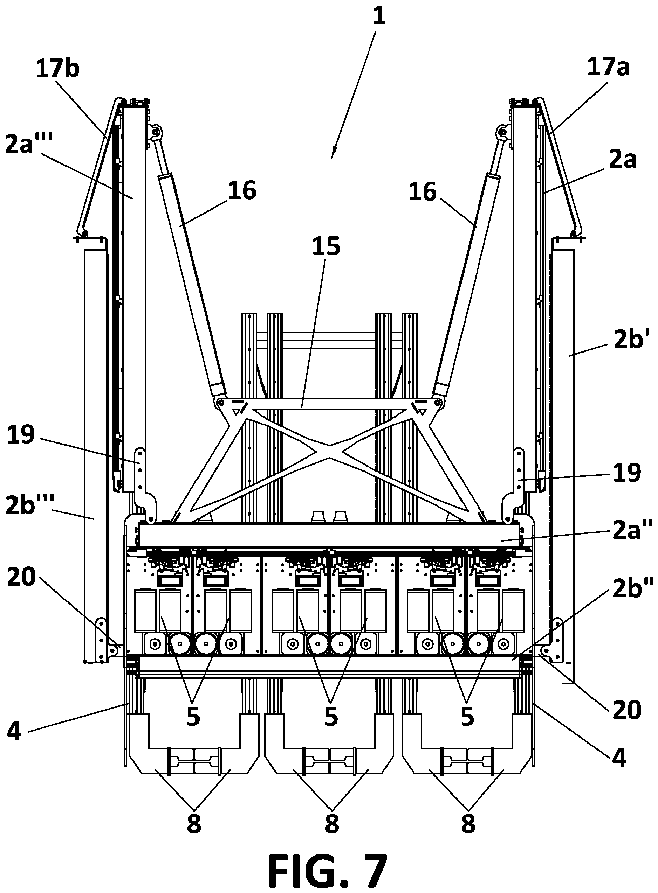

As it can be noted especially in view of figures 8 and 9, due to the compact design of the fruit collecting assembly (5), a large number of robotic arms (4) can be accommodated in the machine, hence the harvesting capacity of the machine is significantly improved. In particular in view of figure 8, due to thin profile of the fruit collector assemblies (5), and because each robotic arm (4) only moves in two directions within a plane, the consecutive pairs of rails (2) can the disposed very close to each other. For example in the embodiment shown in figures 7 and 8, sixty robotic arms (4) are accommodated within an area of 9 square meters, which is a remarkable advantage compared with prior art machines which typically requires 4 square meters to allow the movement of a single robotic arm.

The machine (1) includes a self-propelled vehicle (12) having wheels (13), and the pairs of rails (2) and the fruit collecting assemblies (5) are mounted on the vehicle (12), which is adapted to move between crop rows (14) while the robotic arms (4) cut and collect fruits towards conveyor belts (18), by means of which the fruits are transported to a packaging station. Each robotic arm (4) is preferably oriented towards one side of each crop row (14), and operates autonomously and independently from the rest. For example, each robotic arm (4) can be provided with its own viewing system including a camera, and image processing means, so that each robotic arm (4) operates autonomously from the rest.

Conventionally, a viewing system and a control system, are adapted for detecting fruits and for guiding individually the robotic arms towards the fruits. The control system is also adapted to avoid collision between the fruit collecting assemblies (5) mounted in the same pair of rails (2).

The communications between the control system and the fruit collecting assemblies (5), is preferably implemented by Wifi communication, therefore replacement or rearrangement of the robotic arms (4) is very simple.

Another relevant feature of the invention is represented in figure 7. Each of the rails (2a,2b) are formed by several segments articulated to each other, and some segments of the rails can be folded upwardly within the same plane in order to reduce the overall volume of the machine and to facilitate transportation and storage.

More in detail in view of figure 7, the upper rail (2a) is formed by a central segment (2a"), a first lateral segment (2a') and a second lateral segment (2a'"), wherein the lateral segments are articulated with respect to the central segment, that is, the lateral segments are joined to the central segment by means of respective pivot points (19). Similarly, the lower rail (2b) is formed by a central segment (2b"), a first lateral segment (2b') and a second lateral segment (2b'"), wherein the lateral segments are joined to the central segment by means of respective pivot points (20).

Two arms (17a,17b) are pivotally connected, respectively with the ends of the two lateral segments (2a',2b') and with the ends of the two lateral segments (2a'",2b'"), as shown in figure 7. Each pair of lateral segment together with its lateral arm, behaves mechanically has a deformable parallelogram.

The machine (1) has at least one framework (15) and two or more actuators, for example hydraulic or pneumatic cylinders (16) connected between the framework (15) and one end, respectively of the lateral segments (2a', 2a'"). When a human operator activates a folded position command for the machine, the control system arrange all the fruit collecting assemblies at the central sections of the rails (2a,2b), and after that, the cylinders (16) pull the lateral segments of the rails upwards, until the machine is configured in the folded position shown in figure 7.

Having sufficiently described the present invention as well as the manner of putting it into practice, it is not considered necessary to further explain it for any person skilled in the art to understand its scope and the advantages derived therefrom, stating that it can be carried out to practice in other embodiments which differ in detail from the one indicated as an example and which are likewise covered by the claims.

## Claims

1. Harvesting automatic machine (1), comprising
- at least a pair of rails (2a, 2b) parallel to each other,
- at least a fruit collector assembly (5) movably coupled with the pair of rails (2a, 2b), the fruit collector assembly (5) comprising a carriage (3) movably mounted on the pair of parallel rails (2a, 2b), and a robotic arm (4) movably mounted on the carriage (3), wherein the carriage (3) is movable along the pair of parallel rails (2a, 2b), and the robotic arm (4) is movable in a transverse direction to the parallel rails (2a, 2b),
- a first motor (6) for moving the carriage (3), and
- a second motor (7) for moving the robotic arm (4) **characterised in that**
- the first and second motors (6, 7) are mounted on the carriage (3), the rails of the pair of parallel rails (2a, 2b) have a central segment (2a", 2b") and at least a first lateral segment (2a', 2b') articulated with respect to the central segment (2a", 2b"), and wherein the lateral segment (2a', 2b') can be folded upwardly
with respect to the central segment (2a", 2b") within the same plane;
the machine (1) further comprises at least one framework (15) and at least one actuator, connected between the framework (15) and one end of the lateral segment (2a', 2b'), and wherein the actuator is configured to pull the lateral segment (2a', 2b') of the rails (2a, 2b) upwardly.

2. Machine (1) according to claim 1, further comprising two or more fruit collector assemblies movably mounted on the same pair of parallel rails (2a, 2b).

3. Machine (1) according to claim 1, further comprising two or more pairs of parallel rails (2a, 2b), wherein the pairs of parallel rails (2a, 2b) are arranged consecutively one after the other in parallel planes.

4. Machine (1) according to claim 1, further comprising a rack and pinion mechanism (21) for moving the carriage (3), wherein the rack is fitted to one of the rails (2a, 2b), and the pinion (21) is engaged with the rack and it associated with the first motor (6) shaft.

5. Machine (1) for according to claim 1, further comprising a rack (9) and pinion mechanism (10) for moving the robotic arm (4), wherein the rack (9) is fitted to the robotic arm (4), and the pinion (10) is engaged with the rack (9) and it associated with the second motor (7) shaft.

6. Machine (1) according to claim 1, wherein the rails of the pair of parallel rails (2a, 2b) include electric conductors, and the first and second motors (6, 7) are electrically connected with said electric conductors to be electrically fed during operation.

7. Machine (1) for according to claim 1, wherein the robotic arm (4) has a cutting and collecting head (8) attached at its lower end for cutting and collecting fruits, wherein the cutting and collecting head (8) has a cutter and a receptacle for collecting a fruit.

8. Machine (1) according to claim 7, further comprising a viewing system and a control system, adapted for detecting fruits and for guiding individually the robotic arms (4) towards the fruits.

9. Machine (1) according to claim 1, further comprising a vehicle (12) and wherein the at least one pair of rails (2a, 2b) are mounted on the vehicle (12).

10. Machine (1) according to claim 1, wherein the first and second motors (6, 7) are arranged parallel to each other.

11. Machine (1) according to claim 1, wherein a control system is adapted to configure the machine (1) in a folded position, and for that, the control system is adapted to arrange all the fruit collector assemblies at the central segment (2a", 2b") of the associated rails (2a, 2b), and after that to move the rail lateral segments (2a', 2a"', 2b', 2b'") by means of the actuator.

## Patentansprüche

1. Automatische Erntemaschine (1), umfassend
- wenigstens ein Paar von zueinander parallelen Schienen (2a, 2b),
- wenigstens eine Fruchtsammelvorrichtung (5), die mit dem Schienenpaar (2a, 2b) beweglich gekoppelt ist, wobei die Fruchtsammelvorrichtung (5) einen Wagen (3), der auf dem parallelen Schienenpaar (2a, 2b) beweglich montiert ist, und einen Roboterarm (4) umfasst, der auf dem Wagen (3) beweglich montiert ist, wobei der Wagen entlang des parallelen Schienenpaars (2a, 2b) beweglich ist, und der Roboterarm (4) in einer zu denen parallelen Schienen (2a, 2b) transversalen Richtung beweglich ist,
- einen ersten Motor (6) zum Bewegen des Wagens (3), und
- einen zweiten Motor (7) zum Bewegen des Roboterarms (4), **dadurch gekennzeichnet, dass**
- der erste und der zweite Motor (6, 7) auf dem Wagen (3) montiert sind,
- die Schienen des parallelen Schienenpaars (2a, 2b) ein zentrales Segment (2a", 2b") und wenigstens ein erstes seitliches Segment (2a', 2b') aufweisen, das bezüglich des zentralen Abschnitts (2a", 2b") mit einem Gelenk versehen ist, und wobei das seitliche Segment (2a', 2b') bezüglich des zentralen Segments (2a", 2b") innerhalb derselben Ebene hochgefaltet werden kann; wobei die Maschine (1) weiterhin wenigstens ein Gerüst (15) und wenigstens einen Aktuator umfasst, der zwischen dem Gerüst (15) und einem Ende des seitlichen Segments (2a', 2b') verbunden ist, und wobei der Aktuator konfiguriert ist, um das seitliche Segment (2a', 2b') der Schienen (2a, 2b) hochzuziehen.

2. Maschine (1) nach Anspruch 1, weiterhin umfassend zwei oder mehrere Fruchtsammelvorrichtungen, die auf demselben Paar paralleler Schienen (2a, 2b) beweglich montiert sind.

3. Maschine (1) nach Anspruch 1, weiterhin umfassend zwei oder mehrere Paare paralleler Schienen (2a, 2b), wobei die Paare paralleler Schienen (2a, 2b) aufeinanderfolgend in parallelen Ebenen angeordnet sind.

4. Maschine (1) nach Anspruch 1, weiterhin umfassend eine Zahnstangen- und Ritzelmechanik (21) zum Bewegen des Wagens (3), wobei die Zahnstange an eine der Schienen (2a, 2b) montiert ist, und das Ritzel (21) in die Zahnstange eingreift und mit einer Welle des ersten Motors (6) verbunden ist.

5. Maschine (1) nach Anspruch 1, weiterhin umfassend eine Zahnstangen- (9) und Ritzelmechanik (10) zum Bewegen des Roboterarms (4), wobei die Zahnstange (9) an den Roboterarm (4) montiert ist und das Ritzel (10) in die Zahnstange (9) eingreift und mit einer Welles des zweiten Motors (7) verbunden ist.

6. Maschine (1) nach Anspruch 1, wobei die Schienen des parallelen Schienenpaars (2a, 2b) elektrische Leitungen aufweisen, und wobei der erste und der zweite Motor (6, 7) mit den elektrischen Leitungen elektrisch verbunden sind, um während des Betriebs elektrisch gespeist zu werden.

7. Maschine (1) nach Anspruch 1, wobei der Roboterarm (4) einen Schneide- und Sammelkopf (8) hat, der an seinem unteren Ende angebracht ist, zum Schneiden und Sammeln von Früchten, wobei der Schneide- und Sammelkopf (8) einen Schneider und eine Aufnahme zum Sammeln einer Frucht aufweist.

8. Maschine (1) nach Anspruch 7,
weiterhin umfassend ein Sichtsystem und ein Kontrollsystem, das dafür angepasst ist, um Früchte zu erkennen und individuell den Rotoberarm (4) zu den Früchten zu führen.

9. Maschine (1) nach Anspruch 1, weiterhin umfassend ein Fahrzeug (12), und wobei das wenigstens eine Paar Schienen (2a, 2b) auf dem Fahrzeug (12) montiert ist.

10. Maschine (1) nach Anspruch 1, wobei der erste und zweite Motor (6, 7) parallel zueinander angeordnet sind.

11. Maschine (1) nach Anspruch 1, wobei ein Kontrollsystem dazu angepasst ist, die Maschine (1) in einer gefalteten Position zu konfigurieren, und wobei hierfür das Kontrollsystem dazu angepasst ist, alle Fruchtsammelvorrichtungen am zentralen Segment (2a", 2b") der assoziierten Schienen (2a, 2b) anzuordnen und danach die seitlichen Segmente (2a', 2a"', 2b', 2b"') mittels des Aktuators zu bewegen.

## Revendications

1. Machine de récolte automatique (1), comprenant :
- au moins une paire de rails (2a, 2b) parallèles l'un à l'autre,
- au moins un ensemble de collecteur de fruits (5) raccordé de manière mobile à la paire de rails (2a, 2b), l'ensemble collecteur de fruits (5) comprenant un chariot (3) monté de manière mobile à la paire de rails parallèles (2a, 2b), et un bras robotisé (4) monté de manière mobile sur le chariot (3), dans lequel le chariot (3) est mobile le long de la paire de rails parallèles (2a, 2b), et le bras robotisé (4) est mobile dans une direction transversale aux rails parallèles (2a, 2b),
- un premier moteur (6) permettant de déplacer le chariot (3), et
- un second moteur (7) permettant de déplacer le bras robotisé (4), **caractérisée en ce que**
- le premier et le second moteurs (6, 7) sont montés sur le chariot (3),
- les rails de la paire de rails parallèles (2a, 2b) présentent un segment central (2a", 2b") et au moins un premier segment latéral (2a', 2b') articulé relativement au segment central (2a", 2b"), et dans lequel le segment latéral (2a', 2b') peut être replié vers le haut par rapport au segment central (2a", 2b") dans le même plan ;
la machine (1) comprend en outre au moins un cadre (15) et au moins un actionneur, raccordés entre le cadre (15) et une extrémité du segment latéral (2a', 2b'), et dans laquelle l'actionneur est configuré afin de tirer le segment latéral (2a', 2b') des rails (2a, 2b) vers le haut.

2. Machine (1) selon la revendication 1, comprenant en outre deux ensembles de collecteurs de fruits ou plus, montés de manière mobile sur la même paire de rails parallèles (2a, 2b).

3. Machine (1) selon la revendication 1, comprenant en outre deux paires ou plus de rails parallèles (2a, 2b), dans laquelle les paires de rails parallèles (2a, 2b) sont agencées consécutivement l'une après l'autre dans des plans parallèles.

4. Machine (1) selon la revendication 1, comprenant en outre un mécanisme de râtelier et de pignon (21) permettant de déplacer le chariot (3), dans laquelle le râtelier est installé sur l'un des rails (2a, 2b), et le pignon (21) est mis en prise avec le râtelier et est associé au premier arbre de moteur (6).

5. Machine (1) selon la revendication 1, comprenant en outre un mécanisme de râtelier (9) et un pignon (10) permettant de déplacer le bras robotisé (4), dans lequel le râtelier (9) est installé sur le bras robotisé (4), et le pignon (10) est mis en prise avec le râtelier (9) et est associé au second arbre de moteur (7).

6. Machine (1) selon la revendication 1, dans laquelle les rails de la paire de rails parallèles (2a, 2b) incluent des conducteurs électriques, et le premier et le second moteurs (6, 7) sont électriquement raccordés auxdits conducteurs électriques afin qu'ils soient électriquement alimentés pendant l'opération.

7. Machine (1) selon la revendication 1, dans laquelle le bras robotisé (4) présente une tête de coupe et de récolte (8) fixée à son extrémité inférieure permettant de couper et de récolter les fruits, dans laquelle la tête de coupe et de récolte (8) présente un couteau et un réceptacle permettant de récolter un fruit.

8. Machine (1) selon la revendication 7, comprenant en outre un système de visualisation et un système de commande, adaptés afin de détecter des fruits et afin de guider individuellement les bras robotisés (4) vers les fruits.

9. Machine (1) selon la revendication 1, comprenant en outre un véhicule (12) et dans laquelle la au moins une paire de rails (2a, 2b) est montée sur le véhicule (12).

10. Machine (1) selon la revendication 1, dans laquelle le premier et le second moteurs (6, 7) sont agencés de manière parallèle l'un à l'autre.

11. Machine (1) selon la revendication 1, dans laquelle un système de commande est adapté afin de configurer la machine (1) dans une position repliée, et pour cela, le système de commande est adapté afin d'agencer tous les ensembles de collecteurs de fruits au niveau du segment central (2a", 2b") des rails associés (2a, 2b), et après cela, afin de déplacer les segments latéraux de rail (2a', 2a'", 2b', 2b'") au moyen de l'actionneur.
